# EUROPÄISCHE PATENTANMELDUNG

(11) **EP 3 345 723 A1**
(43) Veröffentlichungstag der Anmeldung: **11.07.2018**
(21) Anmeldenummer: 17150786.6
(22) Anmeldetag: 10.01.2017
(51) Int. Cl.: B23Q 17/22, B23Q 17/24, A61C 13/00

(54) **VERFAHREN ZUR STEUERUNG EINER WERKZEUGMASCHINE**

(71) Anmelder: Ivoclar Vivadent AG, 9494 Schaan (LI)
(72) Erfinder: SEILER, Christian, 8052 Zürich (CH); ROHNER, Gottfried, 9450 Altstätten (CH)
(74) Vertreter: Splanemann

(57) **Zusammenfassung**

Die Erfindung betrifft ein System aus einem Verfahren zur Steuerung einer Werkzeugmaschine, und einem Werkstück, insbesondere einem Fräsrohling, und dem Verfahren zur Bearbeitung dieses Werkstücks, welche Werkzeugmaschine einen in mindestens 2, insbesondere mindestens 3 Raumachsen in einem Bewegungbereich beweglichen Roboterarm aufweist, der mindestens ein Werkstück, ggf. über einen Werkstückhalter, trägt, führt und bewegt, mit einer Steuereinheit für die Steuerung der Werkzeugmaschine. Die Werkzeugmaschine (62) weist einen Sensor, insbesondere einen raumfesten optischen Sensor, auf, oder der Sensor ist ihr zugeordnet, dessen Erfassungsbereich (66) sich mit dem Bewegungsbereich mindestens teilweise überlappt. Das Werkstück (10) weist ein Loch (12) auf, wird vom Roboterarm (70) in dem Erfassungsbereich (66) bewegt und bei Erfassung des Lochs (12) durch den Sensor legt die Steuereinheit einen Referenzpunkt oder eine Referenzfläche für die Steuerung der Werkzeugmaschine (62) fest.

## Beschreibung

Die Erfindung betrifft ein System aus einem Verfahren zur Steuerung einer Werkzeugmaschine und einem Werkstück, insbesondere einem Fräsrohling, und dem Verfahren zur Bearbeitung dieses Werkstücks, gemäß dem Oberbegriff der Ansprüche 1 und 14.

Ein derartiges System lässt sich beispielsweise der US 2007/111,640 A1 entnehmen. Die dortige Fräsmaschine weist eine Kamera auf, die ortsfest angebracht ist. Sie ist oberhalb eines Werkzeugs angeordnet und weist einen Erfassungsbereich auf, der auf ein Werkzeug gerichtet ist. Die Kamera soll den Zustand der Spitze des Werkzeugs erfassen.

Insbesondere bei Fräsmaschinen, die einen Roboterarm aufweisen, der in vier oder fünf Raumachsen beweglich ist, und diesen mit einer feststehenden Werkzeugspindel kombinieren, besteht die Notwendigkeit, die je zugrunde zu legende Position des Werkstücks relativ zu dem Werkzeug zu ermitteln. Beispielsweise ist es vorgeschlagen worden, mit dem Roboterarm und dem dort eingespannten Werkzeug vorsichtig an die Spindel heranzufahren. Durch den Kontakt und die spanabhebende Bearbeitung steigt der Maschinenstrom des Spindelmotors an, so dass hierüber festgestellt werden kann, wenn ein Kontakt vorliegt.

Diese Lösung ist jedoch vergleichsweise ungenau und erfordert es, eine gewissen Menge an Abrieb zu erzeugen, was eine weitere Ungenauigkeit mit sich bringt.

Heutige Werkzeugmaschinen, insbesondere Fräsmaschinen, aber auch Dreh-Fräsmaschinen, Schleifmaschinen und Bohrmaschinen für die Dentalindustrie müssen in der Lage sein, auch unterschiedliche Werkstücke zu handhaben. Diese müssen teils mit unterschiedlichen Programmen, teils aber auch mit unterschiedlichen Werkzeugen bearbeitet werden.

Hierzu ist es vorgeschlagen worden, über Identifikationsmittel eine Zuordnung zwischen dem betreffenden Werkstück und dem zugehörigen Programm zu ermöglichen. Jedoch erfordern unterschiedliche Werkstücke auch unterschiedliche Werkzeuge, so dass dennoch ein Benutzereingriff für den Werkzeugwechsel erforderlich wäre.

Demgegenüber liegt der Erfindung die Aufgabe zugrunde, ein System aus einem Verfahren zur Steuerung einer Werkzeugmaschine und einem Werkstück, insbesondere ein Fräsrohling, und dem Verfahren zur Bearbeitung dieses Werkstücks gemäß dem Oberbegriff der Ansprüche 1 bzw. 14 zu schaffen, das hinsichtlich der Nachteile des Standes der Technik weiter verbessert ist.

Diese Aufgabe wird erfindungsgemäß durch Anspruch 1 bzw. 14 gelöst. Vorteilhafte Weiterbildungen ergeben sich aus den Unteransprüchen.

Die erfindungsgemäße Lösung gemäß Anspruch 1 zeichnet sich zunächst dadurch aus, dass ein Sensor, insbesondere ein raumfester optischer Sensor, einen Erfassungsbereich aufweist, der sich mit dem Bewegungsbereich des Werkstücks, das im Roboterarm eingespannt ist, überlappt, und zwar mindestens teilweise. Die entsprechend vorgesehene Kamera vermag so die Bewegung des Werkstücks zu erfassen.

Das Werkstück weist in dieser Ausgestaltung ein Loch auf, und das Loch wird bevorzugt orthogonal bezogen auf den Sensor, beispielsweise eine Kamera, seitlich bewegt. Die Erfassungsachse bei einer Kamera, also die optische Achse, erfasst, wenn der Rand des Lochs unter der Achse ist. Das Loch ist bevorzugt scharfkantig und erstreckt sich gegenüber der Fläche, in der es ausgebildet ist, im Winkel von 90° mit einer Winkelabweichung von weniger als 1°. Bei Verwendung einer Kamera ergibt sich ein scharfer Hell/Dunkel-Übergang, und die exakte Position des Lochbeginns in der Bewegungsrichtung des Roboterarms lässt sich so feststellen.

Bevorzugt wird hieran anschließend der Roboterarm in einem Winkel von 90° zur bestehenden Bewegungsrichtung geführt, und zwar so, dass erneut das Loch durch die Achse geführt wird.

Die beiden Richtungen können als X-Richtung und Y-Richtung bezeichnet werden.

Der Durchmesser des Lochs ist bekannt, so dass der Roboterarm einen seitlichen Versatz um den Lochradius durchführt, und die Bewegungsbahn ist so gewählt, dass die Sensorachse im Rahmen der Bewegung auch die Lochachse durchtritt.

Durch eine mathematische Verknüpfung der beiden Erfassungsbahnen lässt sich nun die Lochmitte, also die Lochachse, genau bestimmen.

Dieser Wert wird als Referenzpunkt in der X/Y-Richtung festgelegt und für die spanabhebende Bearbeitung, also beispielsweise das Fräsen, wird eine Koordinatentransformation zur ebenfalls bekannten Position des Werkzeugs in der Werkzeugspindel vorgenommen.

Das Werkstück kann beispielsweise ein dentaler Fräsrohling sein. Für die Herstellung eines Abutments ist die Realisierung eines entsprechenden Lochs erforderlich, so dass das System gemäß Anspruch 1 besonders geeignet für die Herstellung eines Abutments ist. Dieses wird dann per Fräsen um das Loch herum erzeugt, und zwar erfindungsgemäß besonders vorteilhaft mit hoher Genauigkeit, da die Ausrichtung und Anordnung des Lochs im Fräsrohling erfindungsgemäß erfasst wird und daher das Fräsen so erfolgen kann, dass die erwünschten gleichen Wandstärken und eine im Wesentlichen symmetrische Ausgestaltung des Abutments möglich ist.

Es versteht sich, dass erfindungsgemäß nicht ausgeschlossen ist, dass das Abutment eine Verdrehsicherung hat. Diese kann sowohl innen als auch außen realisiert sein, wobei andererseits bei Realisierung der Verdrehsicherung als einwärts vorspringender Steg im Loch bevorzugt die Messung so erfolgt, dass die Bewegungsbahn nicht gerade durch die Verdrehsicherung verläuft.

Wenn das Werkstück als Quader ausgebildet ist und die Bewegungsbahnen sich dann senkrecht zu Quaderflächen erstrecken, lässt sich eine entsprechende Verdrehsicherung dann beispielsweise im Winkel von 45° zu diesen Richtungen anbringen, wobei dann sichergestellt ist, dass keine der Bewegungsbahnen die Verdrehsicherung betreffen.

Bei Realisierung der Werkstücke aus vorgesinterter Dentalkeramik sind typischerweise die Flächen, beispielweise des im Wesentlichen quaderförmigen Werkstücks, nicht exakt eben. Dies gilt insbesondere, wenn das Werkstück in vorgesinterter Form als Lithiummetasilikat vorliegt. Beispielsweise sind die Kanten des Werkstücks dann auch abgerundet.

In einer besonderen Ausgestaltung der Erfindung ist es vorgesehen, dass kurzerhand mindestens eine der Flächen des Werkstücks vorab plan gefräst wird. Hiermit lässt sich gegenüber mindestens einer weiteren, hierzu senkrecht liegenden Fläche eine scharfe Kante erzeugen. Diese ist wesentlich besser für die Bereitstellung eines Hell/Dunkel-Übergangs und damit die exakte Bestimmung geeignet, als eine leicht gerundete Fläche, oder eine Fläche, die über einen Radius in eine andere Quaderfläche übergeht.

Erfindungsgemäß ist es daher vorgesehen, zunächst ein Vorfräsen mit mindestens einer oder mindestens zwei aneinander angrenzenden Flächen vorzusehen und dann das Werkstück durch den Erfassungsbereich des Sensors zu bewegen, mit dem Ziel, die so erzeugte scharfe Kante zu ermitteln, und diese als Referenzfläche zu verwenden.

Diese Lösung ist auch für Werkstücke geeignet, die kein Loch aufweisen.

Gemäß dieser Lösung muss sich ebenfalls der Erfassungsbereich mit dem Bewegungsbereich mindestens teilweise überlappen, und es wird das Werkstück vom Roboterarm mit einer vorerzeugten planen Fläche und deren Kante gegenüber einer anderen Fläche in den Erfassungsbereich bewegt. Bei Erfassung der Kante wird durch den Sensor das betreffende Sensorsignal der Steuereinheit zugeleitet, die damit den Referenzpunkt oder eine Referenzfläche für die Steuerung der Werkzeugmaschine festlegt.

Es versteht sich, dass bevorzugt das Werkstück und die Werkzeugmaschine insgesamt zueinander orthogonale Koordinaten aufweisen, die besonders geeignet sind, wenn im Wesentlichen quaderförmige Werkstücke bearbeitet werden sollen. Bei Bearbeitung scheibenförmiger Werkstücke können aber anstelle dessen auch mindestens teilweise polare Koordinatensysteme verwendet werden.

Das erfindungsgemäße System gemäß Anspruch 14 ist auch besonders geeignet, um eine Zuordnung zwischen dem Werkstück und der erforderlichen Bearbeitung zu realisieren. Hierfür kann die Kamera, die den Sensor ausbildet, gleich eingesetzt werden, das Werkstück über einen dort angebrachten Code zu identifizieren. Ferner kann auch das Werkzeug einen entsprechenden Code aufweisen, bevorzugt an seinem Schaft, der von dem Roboterarm geführt wird und dort freiliegt, also für die Kamera sichtbar ist.

Bei dieser vorteilhaften Ausgestaltung, kann die Kamera erfassen, um welche Art von Werkstück es sich handelt. Dieses beispielsweise durch einen Data-Matrix-Code festgelegte Identifikationsmerkmal wird der Steuereinheit zugeleitet. Diese legt dann fest, nach welchem Fräsvorgang das Werkstück zu fräsen ist. Ferner wird ein geeignetes Werkzeug ausgewählt, wozu wiederum die Identifizierung des Werkzeugs über den am Schaft angebrachten Code, beispielsweise einen zweidimensionalen Code 128, erfolgt.

Die Erfindung ist besonders geeignet für Denatlfräsmaschinen, insbesondere solche, die eine Achsenverteilung von 5/0 haben, also eine starre Frässpindel und einen in 5 Achsen beweglichen Roboterarm. Dessen Maschinennullpunkt läßt sich dann besonders gut über die Erfassung mit der Kamera kalibrieren; die Lage des Werkzeugs an der Spindel ist hingegen fixiert.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: einen Schnitt durch ein Werkstück, wie es bei einem erfindungsgemäßen System zum Einsatz kommen kann, das an einem Halter befestigt ist, in einer ersten Ausführungsform;
- Fig. 2: eine vergrößerte Darstellung eines Details aus Fig. 1;
- Fig. 3: eine Teildarstellung einer anderen Ausführungsform eines Werkstücks;
- Fig. 4: eine perspektivische Ansicht eines Werkzeugs;
- Fig. 5: eine Seitenansicht eines erfindungsgemäßen Werkzeugs;
- Fig. 6: eine weitere Ausführungsform eines erfindungsgemäßen Werkstücks mit eingezeichneter Bewegungsbahn;
- Fig. 7: das Werkstück gemäß Fig. 6 und die andere vorgesehene Bewegungsbahn;
- Fig. 8: eine perspektivische Ansicht eines erfindungsgemäßen Systems; und
- Fig. 9: das System gemäß Fig. 8 in einer anderen Position des Roboterarms.

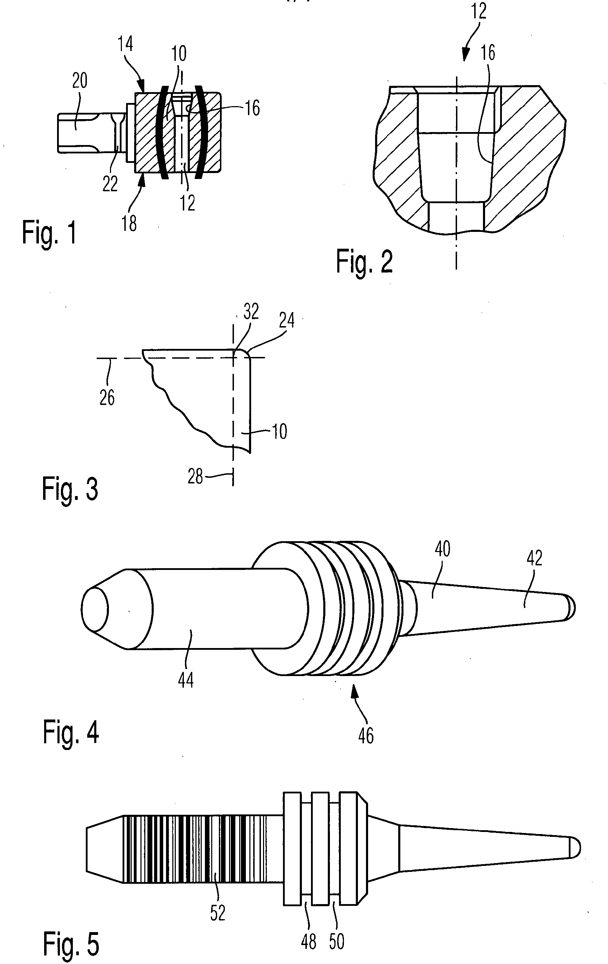

Das in Fig. 1 dargestellte Werkstück 10 weist ein Loch 12 auf, das sich quer durch das Werkstück hindurch erstreckt. Einer oberen Fläche 14 benachbart ist ein Konus 16 des Lochs vorgesehen. Demgegenüber ist das Loch 12 an der unteren Fläche 18 frei von einem Konus.

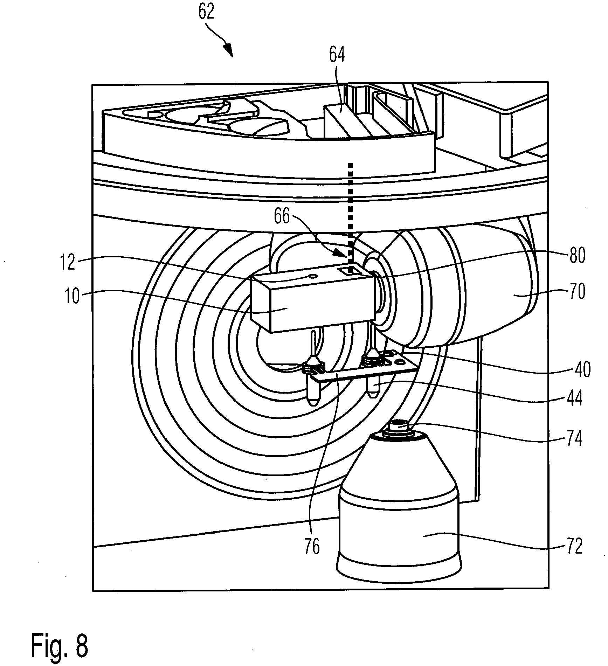

Das Werkstück 10 besteht in dem dargestellten Ausführungsbeispiel aus Dentalkeramik und ist auf einem Halter 20 aufgebracht. Der Halter 20 dient dazu, es fest in einen Roboterarm einzuspannen, der beispielsweise aus Fig. 8 ersichtlich ist.

Der Halter 20 weist einen seitlichen Schlitz 22 auf, der für die Aufnahme des Werkstücks 10 in einem Werkstückmagazin bestimmt ist.

Aus Fig. 2 ist ersichtlich, wie der Konus 16 ausgebildet sein kann. Der Konuswinkel beträgt im dargestellten Ausführungsbeispiel zwischen drei und fünf Grad. Wenn die Bewegungsbahn des Roboterarms so gewählt wird, dass der Sensor die Fläche 14 und das sich von dort nach unten erstreckende Loch erfasst, erfolgt ein allmählicher Hell/Dunkel-Übergang, aufgrund des Konus 16.

Daher ist es bevorzugt, dass die Fläche 18 dem Sensor zugewandt wird. Dies ist durch eine entsprechende Ansteuerung des Roboterarms ohne Weiteres möglich. Das Loch 12 ist dort scharfkantig und erzeugt somit einen scharfen Hell/Dunkel-Übergang.

Aus Fig. 3 ist ersichtlich, dass in einer modifizierten Ausgestaltung das Werkstück 10 zunächst mit runden Kanten 24 vorliegt. Für die Positionserfassung bzw. die Erzeugung eines Referenzpunkts werden entlang der Linien 26 und 28 Materialabtragungen vorgenommen, kurzerhand über die bevorzugt ortsfest vorgesehene Frässpindel. Es liegen dann je an den Linien 26 und 28 plane Flächen vor, und es ergibt sich eine scharfe Kante 32, die für die Referenzpunktfestlegung verwendet werden kann.

Bevorzugt wird eine weitere plane Fläche orthogonal zu diesen Flächen erzeugt, und es erfolgt eine weitere Erfassung über den erfindungsgemäßen Sensor. Damit sind Referenzpunkte in mehreren Dimensionen für das Werkstück bekannt, und durch entsprechende Koordinatentransformation lässt sich die spanabhebende Bearbeitung des Werkstücks basierend hierauf präzise steuern.

Für das erfindungsgemäße System ist ein in Fig. 4 dargestelltes Werkzeug geeignet. Das Werkzeug 40 weist einen Arbeitsbereich 42 auf, der beispielsweise diamantbestückt sein kann. Am gegenüberliegenden Ende ist ein Schaft 44 des Werkzeugs vorgesehen. Dazwischen trägt das Werkzeug 40 einen Ring 46 mit zwei einander benachbarten Ringnuten 48 und 50. Diese sind dafür bestimmt, an einer Aufnahme des Roboterarms oder einem entsprechenden Greifer gehalten zu werden. Dies ist aus Fig. 8 ersichtlich, aus welcher Figur ebenfalls ersichtlich ist, dass in dieser Position der Schaft 44 des Werkzeugs 40 freiliegt.

Der Schaft 44 ist gemäß Fig. 5 mit einem Code 52 versehen, bevorzugt einem Code 128.

Bei entsprechender Positionierung kann der Sensor oder die Kamera dann den Code und damit das betreffende Werkzeug erfassen und identifizieren.

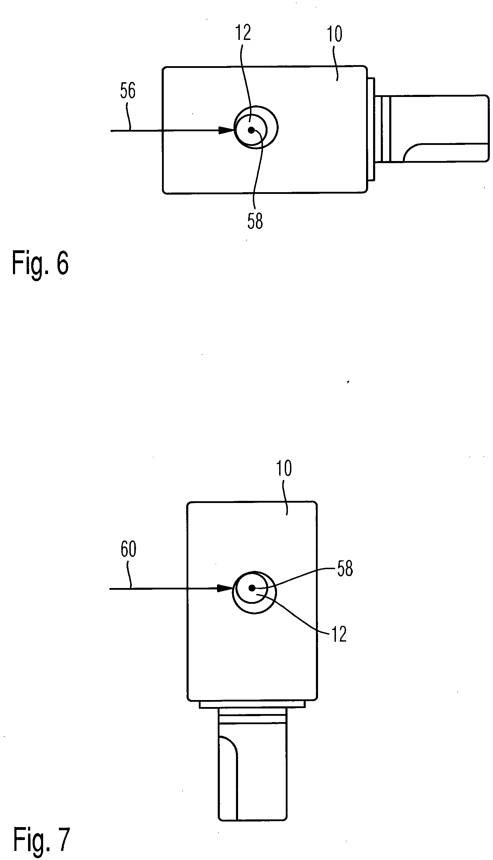

Aus Fig. 6 ist eine mögliche Bewegungsbahn 56 des an dem Roboterarm eingespannten Werkstücks ersichtlich. Das Werkstück wird so geführt, dass ein scharfkantiger Teil des Lochs 12 unter dem Sensor bzw. vor dem Sensor durchtritt, und zugleich wird die Bewegungsbahn 56 so gelegt, dass sie auch die Lochachse 58 schneidet.

In einem zweiten Schritt gemäß Fig. 7 wird eine Bewegungsbahn 60 rechtwinklig zur Bewegungsbahn 56 realisiert. Auch hier durchtritt die Bewegungsbahn die Lochachse 58 und es wird darauf geachtet, dass eine scharfe Lochkante bei Annäherung des Lochs an die Achse des Sensors vorliegt.

Aus Fig. 8 ist eine mögliche grundsätzliche Ausgestaltung einer erfindungsgemäßen Werkzeugmaschine 62 ersichtlich. Eine Kamera 64 ist ortsfest oberhalb eines Fräsraums angebracht und von diesem durch eine nicht dargestellte Tür getrennt. Die Türöffnung behindert nicht den Erfassungsbereich 66 der Kamera.

Es ist ein Roboterarm 70 vorgesehen, der das Werkstück 10 über den nicht dargestellten Halter eingespannt hält. Das Werkstück weist auch in dieser Ausführungsform ein Loch 12 auf und der Roboterarm 70 wird so bewegt, dass das Loch 12 den Erfassungsbereich 66 und die zugehörige optische Achse der Kamera 64 durchtritt.

Dies erfolgt in zwei Dimensionen in horizontaler Richtung, also in X-Richtung und in Y-Richtung.

Unterhalb des Roboterarms 70 ist eine Werkzeugspindel 72 ersichtlich. Diese ist dafür bestimmt, ein Werkzeug 40 über ein Spannfutter 74 eingespannt zu halten. Hierzu wird über den Roboterarm 70 das Werkzeug mit seinem Schaft 44 in das Spannfutter 74 eingeführt und dort eingespannt. Der Roboterarm 70 weist hierzu zwei Aufnahmen 76 für Werkzeuge 40 auf. Diese lassen sich wahlweise in das Spannfutter 74 einsetzen.

Die Aufnahmen 76 sind im Grunde U-förmig und greifen in die Ringnuten 48 oder 50 ein (vergl. Fig. 5). Durch eine derartige Lagerung liegt der Schaft 44 des betreffenden Werkzeugs je frei. Der Roboterarm 70 ist fünfachsig ausgebildet und vermag die Aufnahmen 76 so zu drehen, dass der Schaft 44 in dem Erfassungsbereich 66 liegt. In dieser Position kann die Kamera 64 den dort angebrachten Code lesen und der nicht dargestellten Steuereinheit zur Identifizierung des Werkzeugs zuleiten.

Ferner weist das Werkstück 10 in dem dargestellten Ausführungsbeispiel einen weiteren Code 80 auf, der ebenfalls von der Kamera 64 lesbar und der Steuereinheit zuleitbar ist. Hierüber ist auch eine Identifikation des betreffenden Werkstücks 10 möglich, und dann auch die Auswahl des erwünschten Fräsprogramms.

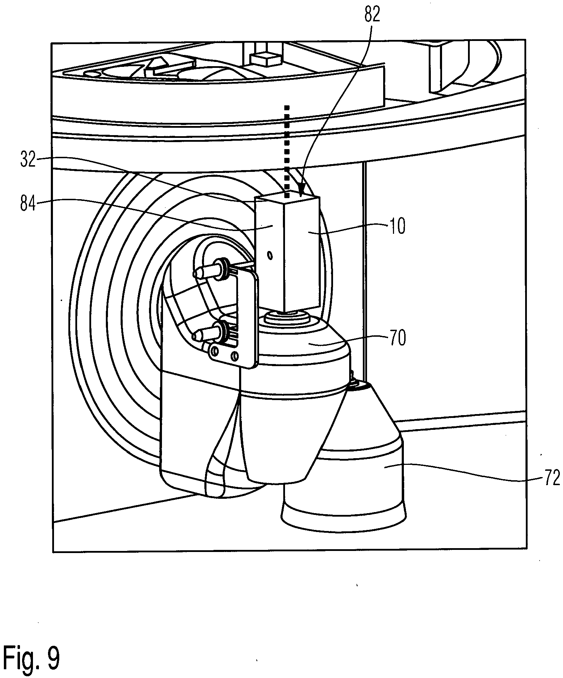

Eine weitere mögliche Position des Roboterarms 70 ist aus Fig. 9 ersichtlich. Diese Position wird beispielsweise eingenommen, wenn die Flächen 82 und 84 des Werkstücks 10 von der Werkzeugspindel 72 plan geschliffen sind. Der Roboterarm wird dann horizontal bewegt, bis die Kante 32 zwischen den Flächen 82 und 84 erkannt wird, und die betreffende erfasste Stelle wird als Referenzpunkt für den später durchzuführenden Fräsvorgang des Werkstücks 10 verwendet.

## Patentansprüche

1. System aus einem Verfahren zur Steuerung einer Werkzeugmaschine, und einem Werkstück, insbesondere einem Fräsrohling, und dem Verfahren zur Bearbeitung dieses Werkstücks, welche Werkzeugmaschine einen in mindestens 2, insbesondere mindestens 3 Raumachsen in einem Bewegungbereich beweglichen Roboterarm aufweist, der mindestens ein Werkstück, ggf. über einen Werkstückhalter, trägt, führt und bewegt, mit einer Steuereinheit für die Steuerung der Werkzeugmaschine, **dadurch gekennzeichnet, dass** die Werkzeugmaschine (62) einen Sensor, insbesondere raumfesten optischen Sensor, aufweist, oder dieser ihr zugeordnet ist, dass dessen Erfassungsbereich (66) sich mit dem Bewegungsbereich mindestens teilweise überlappt, dass das Werkstück (10) ein Loch (12) aufweist, dass das Werkstück (10) vom Roboterarm (70) in dem Erfassungsbereich (66) bewegt wird, und dass bei Erfassung des Lochs (12) durch den Sensor die Steuereinheit einen Referenzpunkt oder eine Referenzfläche für die Steuerung der Werkzeugmaschine (62) festlegt.

2. System nach Anspruch 1, **dadurch gekennzeichnet, dass** das Werkstück (10) vor Erfassung des Lochs (12) an der das Loch (12) aufweisenden Fläche (14) spanabhebend bearbeitet ist, insbesondere unter Erzeugung einer planen Fläche an der das Loch aufweisenden Fläche.

3. System nach einem der vorhergehenden Ansprüche, **dadurch gekennzeichnet, dass** der Roboterarm (70) das Loch (12) des Werkstücks (10) während der Erfassung parallel zur Achse des Sensors ausrichtet, wobei der Sensor insbesondere eine Kamera (64) ist.

4. System nach einem der vorhergehenden Ansprüche, **dadurch gekennzeichnet, dass** das Loch (12) sich mit seiner Achse senkrecht zu einer Fläche (14) des Werkstücks (10) erstreckt und dass diese Fläche (14) insbesondere vor der Erfassung spanabhebend bearbeitet, bevorzugt plan geschliffen ist.

5. System nach einem der vorhergehenden Ansprüche, **dadurch gekennzeichnet, dass** das Werkstück (10) auf einem Halter (20) angebracht, insbesondere aufgeklebt ist, welcher Halter (20) in dem Roboterarm (70) eingespannt gehalten ist.

6. System nach einem der vorhergehenden Ansprüche, **dadurch gekennzeichnet, dass** das Loch (12) als Durchtrittsausnehmung durch das Werkstück (10) ausgebildet ist und insbesondere an einer Seite einen Konus (16) aufweist.

7. System nach einem der vorhergehenden Ansprüche, **dadurch gekennzeichnet, dass** das Loch (12) mit dem konusfreien Ende für die Erfassung durch den Sensor auf diesen ausgerichtet ist.

8. System nach einem der vorhergehenden Ansprüche, **dadurch gekennzeichnet, dass** die Werkzeugmaschine (62) die Kamera (64) in einem Hilfsraum aufweist, der über eine öffenbare Tür von einem Bearbeitungsraum getrennt ist, und dass der Roboterarm (70) das Werkstück (10) für die Erfassung des Lochs (12) unmittelbar benachbart der Türöffnung hält und/ oder an dieser vorbeibewegt.

9. System nach einem der vorhergehenden Ansprüche, **dadurch gekennzeichnet, dass** der Roboterarm (70) das Werkstück (10) mit dem Loch (12) in einer X-Richtung geradlinig durch die optische Achse des Sensors bewegt und in einem weiteren Schritt zusätzlich in einer hierzu senkrechten Richtung, der Y-Richtung.

10. System nach einem der vorhergehenden Ansprüche, **dadurch gekennzeichnet, dass** die dem Sensor zugewandte und das Loch (12) aufweisende Fläche (14) des Werkstücks (10) orthogonal zur optischen Achse des Sensors ausgerichtet ist.

11. System nach einem der vorhergehenden Ansprüche, **dadurch gekennzeichnet, dass** der gleiche Roboterarm (70) das Werkstück (10) mit seinem Loch (12) in den Erfassungsbereich (66) eines Sensors hält und das Werkstück (10) für die spanabhebende Bearbeitung einer Werkzeugspindel (72) zuführt.

12. System nach einem der vorhergehenden Ansprüche, **dadurch gekennzeichnet, dass** das Werkstück (10) und/oder sein zugehöriger Halter (20) einen Code (52), insbesondere einen Data-Matrix-Code, aufweist, welcher Code (52) bei in den Roboterarm (70) eingespanntem Halter (20) von dem als Kamera (64) ausgebildeten Sensor lesbar ist, und dass der Code (52) insbesondere auf einem abzufräsenden Teil des Werkstücks (10) angebracht ist.

13. System nach Anspruch 12, **dadurch gekennzeichnet, dass** der von dem Sensor erfasste Code (52) des Werkstücks (10) der Steuereinheit zugeleitet wird und diese eine hierzu passende Bearbeitung für das Werkstück (10) auswählt.

14. System aus einem Verfahren zur Steuerung einer Werkzeugmaschine, und einem Werkstück, insbesondere einem Fräsrohling, und dem Verfahren zur Bearbeitung dieses Werkstücks, welche Werkzeugmaschine einen in mindestens 2, insbesondere mindestens 3 Raumachsen in einem Bewegungbereich beweglichen Roboterarm aufweist, der mindestens ein Werkstück, ggf. über einen Werkstückhalter, trägt, führt und bewegt, mit einer Steuereinheit für die Steuerung der Werkzeugmaschine, **dadurch gekennzeichnet, dass** die Werkzeugmaschine (62) einen Sensor, insbesondere einen raumfesten optischen Sensor, aufweist, oder dieser ihr zugeordnet ist, dass deren Erfassungsbereich (66) sich mit dem Bewegungsbereich mindestens teilweise überlappt, dass ein wechselbares Werkzeug (40) oder das Werkstück (10) einen Code (52) aufweist, dass das Werkstück (10) vom Roboterarm (70) in dem Erfassungsbereich (66) bewegt wird, und dass bei Erfassung des Codes (52) durch den Sensor die Steuereinheit eine Identifikation des Werkstücks (10) und/oder des Werkzeugs (40) für die Steuerung der Werkzeugmaschine (62) zur an die Identität des Werkstücks (10) und/oder des Werkzeugs (40) angepassten Bearbeitung vornimmt.

15. System nach Anspruch 14, **dadurch gekennzeichnet, dass** das Werkzeug (40) an einem Greifer oder einer Aufnahme (76) des Roboterarms (70) gelagert ist und sich insbesondere ein Werkzeugschaft (44) im Erfassungsbereich (66) des Sensors erstreckt.

16. System nach Anspruch 14 oder 15, **dadurch gekennzeichnet, dass** der Schaft (44) des Werkzeugs (40) mit einem Code (52), insbesondere einem eindimensionalen Code 128, versehen ist, welcher über den Sensor der Steuereinheit zur Identifizierung des Werkzeugs (40) zugeleitet wird.

17. System nach einem der vorhergehenden Ansprüche, **dadurch gekennzeichnet, dass** die Werkzeugmaschine (62) eine Fläche (14) des Werkstücks (10), das insbesondere aus Keramik besteht, spanabhebend bearbeitet, insbesondere plan bearbeitet und besonders bevorzugtplan schleift oder fräst, und dass der Roboterarm (70) diese Fläche (14) im Wesentlichen parallel zur Achse des Erfassungsbereichs (66) des Sensors ausrichtet und dass der Roboterarm (70) das Werkstück (10) zur Erfassung der Kante zwischen dieser Fläche und einer benachbarten Fläche an dem Sensor vorbei durch den Erfassungsbereich (66) hindurch bewegt.
